(19) Europäisches Patentamt
European Patent Office
Office européen des brevets

(11) **EP 2 640 027 A1**

(12) **DEMANDE DE BREVET EUROPEEN**

(43) Date de publication:
**18.09.2013 Bulletin 2013/38**

(51) Int Cl.:
***H04L 27/00*** *(2006.01)*

(21) Numéro de dépôt: **13158686.9**

(22) Date de dépôt: **12.03.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **15.03.2012 FR 1252326**

(71) Demandeur: **Commissariat à l'Énergie Atomique et aux Énergies Alternatives 75015 Paris (FR)**

(72) Inventeurs:
• **Gautier, Matthieu**
  **22300 Lannion (FR)**
• **Noguet, Dominique**
  **38870 Saint-Simeon-de-Bressieux (FR)**

(74) Mandataire: **Augarde, Eric et al Brevalex**
  **56, boulevard de l'Embouchure**
  **B.P. 27519**
  **31075 Toulouse Cedex 2 (FR)**

(54) **Méthode d'identification et de détection d'un signal radio pour système de communication opportuniste**

(57) La présente invention concerne une méthode d'identification d'un signal RF pour un système radio opportuniste. L'identification du signal est obtenue à l'aide d'un tatouage numérique effectué en aval de la modulation numérique des symboles à transmettre. L'invention concerne également une méthode de détection d'un signal RF ainsi tatoué. La méthode d'identification consiste à démoduler le signal RF reçu en bande de base (210), à le convertir numériquement (220) et à effectuer une corrélation du signal numérique ainsi obtenu avec une signature numérique prédéterminée (230). Les valeurs de corrélation sont moyennées grâce à un filtre récursif (240) et la valeur maximale des valeurs moyennes en sortie du filtre (250) est comparée à un seuil pour décider si le signal RF est présent (260).

200

RF down converter [210] → CAN [220] → correl. [230] → averaging filter [240] → Max [250] → ⎓ [260]

$w(t)$

**Fig. 2**

EP 2 640 027 A1

**Description**

**DOMAINE TECHNIQUE**

La présente invention concerne les systèmes radio dits opportunistes (*Cognitive Radio ou Opportunistic Radio*) et plus particulièrement l'identification et/ou la détection d'un signal radio par un tel système.

**ÉTAT DE LA TECHNIQUE ANTÉRIEURE**

L'encombrement de plus en plus important du spectre a conduit à envisager des systèmes de télécommunication capables de coexister avec les systèmes à bandes de fréquence déjà allouées, dits primaires. Deux stratégies de coexistence font actuellement l'objet d'importantes recherches. La première consiste à utiliser un niveau de signal très faible grâce à un très fort étalement de spectre, c'est la voie suivie par les systèmes ultra-large bande encore dénommés UWB (*Ultra Wide Band*). La seconde consiste à utiliser de manière opportuniste une partie du spectre ponctuellement ou temporairement inoccupée, c'est la voie dite de radio opportuniste (ou *Cognitive Radio*). On trouvera une description de la radio opportuniste dans la thèse fondatrice de J. Mitola intitulée « Cognitive radio : an integrated agent architecture for software defined radio », Royal Institute of Technology, Stockholm, PhD Dissertation, 8 Mai 2000.

Le principe de la radio opportuniste a été notamment retenu pour le développement des réseaux sans fil à longue portée encore dénommés WRAN (*Wireless Regional Area Network*). Ces réseaux font actuellement l'objet d'un processus de standardisation au sein du groupe de travail de IEEE 802.22. Plus précisément, cette norme en cours d'élaboration propose d'utiliser de manière opportuniste les bandes UHF et VHF vacantes pour réaliser une transmission sans fil point à point dans un réseau WRAN. On trouvera une introduction à la norme IEEE 802.22 dans l'article de C. Cordeiro et al. intitulé « IEEE 802.22 : an introduction to the first wireless standard base on cognitive radios », publié dans Journal of Communications, Vol. 1, N°1, Avril 2006, pp. 38-47. Il est en particulier prévu que les bandes UHF allouées au système de télévision à diffusion par voie terrestre puissent être utilisées à cette fin. La norme utilisée dans de nombreux pays pour la diffusion numérique est le DVB-T (*Digital Video Broadcast-Terrestrial*). Elle fait appel à une modulation OFDM (*Orthogonal Frequency Division Multiplexing*) pour transmettre des flux vidéo/audio compressés.

Les systèmes radio utilisant de manière opportuniste une partie du spectre ponctuellement ou temporairement inoccupée par un système primaire sont ci-après dénommées systèmes opportunistes. Avant de pouvoir émettre dans une bande donnée, un système opportuniste doit pouvoir préalablement déterminer si un système primaire utilise cette bande.

De nombreuses méthodes ont été proposées pour la détection d'une occupation de bande par des systèmes primaires. Elles exploitent souvent le fait que les signaux transmis par ces systèmes sont généralement cyclostationnaires, autrement dit que leur fonction d'autocorrélation est périodique. C'est notamment le cas pour des signaux OFDM émis par les systèmes primaires DVB-T.

En outre, en l'absence même de l'utilisation d'une bande de fréquence par un système primaire, il peut être souhaitable de déterminer si un autre système opportuniste est présent dans une bande donnée, soit pour évaluer la qualité du canal en vue d'une transmission, soit pour identifier, coordonner et échanger des informations avec un autre système opportuniste.

Une première solution pour identifier la présence d'un système opportuniste est d'utiliser un canal de contrôle commun. Toutefois cette solution mobilise de précieuses ressources.

Une seconde solution consiste à introduire une signature cyclostationnaire dans le signal émis par un système opportuniste, comme décrit dans l'article de P.D. Sutton et al. intitulé « Cyclostationary signatures in practical cognitive radio applications » publié dans IEEE Journal on Selected Areas in Comm., vol. n° 26, N° 1, Jan. 2008, pages 13-24. Cet article propose de générer, en sus de la cyclostationnarité inhérente à un signal OFDM, une signature cyclostationnaire de second ordre, en répétant au sein du multiplex de sous-porteuses, un bloc de symboles de modulation à transmettre. La fréquence cyclique de cette signature permet de coder une information de coordination entre systèmes opportunistes. Cette seconde solution présente également l'inconvénient d'utiliser des ressources spectrales de transmission (intervalles de sous-porteuses) et par conséquent de réduire l'efficacité spectrale. En outre, cette solution ne s'applique qu'à un signal obtenu par modulation OFDM.

Le problème à la base de l'invention est de proposer une méthode permettant d'identifier et/ou détecter la présence d'un signal par un système radio opportuniste, qui soit indépendante du type de modulation utilisé et qui ne nécessite pas de mobiliser des ressources spectrales supplémentaires.

**EXPOSÉ DE L'INVENTION**

La présente invention est définie comme une méthode d'identification d'un signal RF pour système radio opportuniste, dans laquelle :

- on effectue une modulation numérique de symboles à transmettre pour obtenir un flux de symboles de modulation ;
- on ajoute une signature numérique au flux de symboles de modulation pour obtenir un signal tatoué, ladite signature présentant une amplitude sensiblement plus faible que lesdits symboles de modulation ;
- on transpose en bande RF le signal ainsi tatoué.

Le signal tatoué est obtenu en ajoutant numériquement la signature numérique au flux de symboles de modulation et en effectuant une conversion numérique analogique du flux résultant.

Avantageusement, le signal tatoué est obtenu en effectuant une conversion numérique analogique du flux de symboles de modulation d'une part pour générer un premier signal analogique et de la signature numérique d'autre part, pour générer un second signal analogique, et en faisant la somme des premier et second signaux analogiques ainsi obtenus.

Selon un premier mode de réalisation, la signature numérique est un code de Gold.

Selon un second mode de réalisation, la signature numérique est un code de Hadamard.

Selon une première variante, la modulation numérique est une modulation multi-porteuse.

Selon une seconde variante, la modulation numérique est une modulation mono-porteuse.

La présente invention concerne également un système radio opportuniste, d'un signal RF identifié à l'aide de la méthode d'identification précédente, dans lequel :

- on transpose le signal RF en bande de base pour obtenir un signal analogique en bande de base ;
- on effectue une conversion analogique numérique du signal analogique numérique en bande de base pour obtenir un signal numérique ;
- on effectue une corrélation du signal numérique avec une signature numérique prédéterminée pour obtenir une valeur de corrélation ;
- on compare ladite valeur de corrélation à une valeur de seuil ; et
- on décide que ledit signal RF est présent si ladite valeur de corrélation est supérieure à la valeur de seuil et qu'il est absent dans le cas inverse.

Avantageusement, on obtient des valeurs de corrélation pour une pluralité de fenêtres de corrélation successives et l'on effectue une moyenne des valeurs de corrélation ainsi obtenues pour obtenir des valeurs de corrélation moyennes.

La moyenne des valeurs de corrélation peut être obtenue à l'aide d'un filtre récursif à coefficient d'oubli.

On peut encore déterminer une valeur de corrélation maximale à partir des valeurs de corrélation moyennes fournies par ledit filtre, ladite décision étant alors prise sur la base de ladite valeur de corrélation maximale.

Selon une première variante, ladite signature numérique est un code de Gold.

Selon une seconde variante, ladite signature numérique est un code de Hadamard.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente schématiquement un émetteur permettant l'identification d'un signal radio par tatouage numérique selon un mode de réalisation de la présente invention ;
La Fig. 2 représente schématiquement un récepteur permettant la détection d'un signal radio transmis par l'émetteur de la Fig. 1, selon un mode de réalisation de l'invention ;
La Fig. 3 représente la modélisation d'un tatouage d'un signal pour un premier utilisateur et de sa détection par un second utilisateur.

## EXPOSÉ DÉTAILLÉ DE MODES DE RÉALISATION PARTICULIERS

Nous considérons à nouveau dans la suite un système opportuniste (parfois encore appelé secondaire) souhaitant déterminer si un signal radio est présent dans une bande de fréquence donnée. Selon un premier scenario, le système opportuniste souhaite préalablement déterminer si cette bande est déjà utilisée par un système primaire afin de pouvoir y transmettre. Selon un second scenario, le système opportuniste souhaite déterminer si un autre système opportuniste donné est déjà présent dans cette bande de manière à pouvoir communiquer avec lui ou y transmettre. D'autres types de scenario peuvent être envisagés sans sortir du cadre de la présente invention.

L'idée à la base de la présente invention est d'identifier (au sens de « signer ») un signal d'un système primaire ou opportuniste en lui ajoutant un tatouage numérique. Ce tatouage numérique peut alors être détecté par un autre système opportuniste au moyen d'une simple opération de corrélation comme expliqué plus loin.

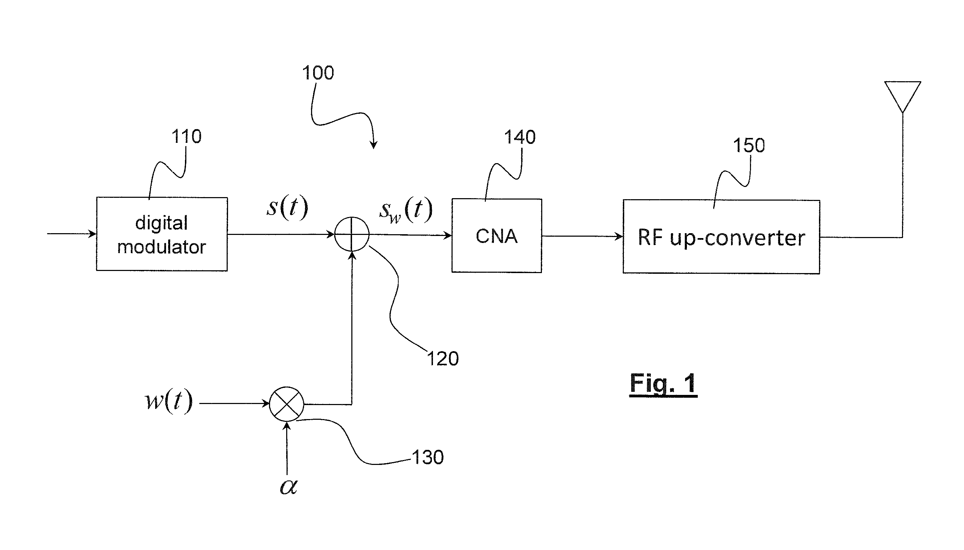

La Fig. 1 représente l'émetteur radio d'un système primaire ou opportuniste, destiné à ajouter un tatouage numérique pour identifier un signal radio.

L'émetteur 100 comprend un modulateur numérique 110 modulant les données à transmettre sous forme de symboles de modulation. La modulation peut être de différents types, par exemple une modulation Q-aire utilisant une constellation de modulation de type QAM ou PSK, suivie ou non d'une modulation OFDM, un étalement spectral à l'aide de séquences orthogonales, etc. On comprendra ainsi que l'émetteur peut-être celui d'un système OFDM, par exemple l'émetteur d'un système DVB-T, ou bien encore un émetteur d'un système DS-CDMA (*Direct Sequence CDMA*) de manière connue en soi.

Une signature numérique $w(t)$ est ajoutée au flux de symboles de modulation en sortie au moyen de l'additionneur 120. On a schématiquement représenté en 130 un multiplicateur pondérant la signature numérique par un coefficient $\alpha$ préalablement à son addition aux symboles de modulation. Ceci traduit le fait que la signature numérique est ajoutée avec un poids binaire faible au regard de celui de ces symboles. Par exemple, si les symboles de modulation sont exprimés sur $N$ bits, la signature numérique pourra simplement être codée à l'aide du dernier LSB.

Il est important de noter que la signature numérique est ici indépendante du type de modulation utilisée. La signature numérique est avantageusement choisie parmi une famille de séquences présentant un pic d'autocorrélation prononcé pour être facilement détectable et un faible taux d'intercorrélation pour pouvoir être aisément discriminable d'une autre signature. On pourra opter pour une séquence pseudo-aléatoire telle qu'une m-séquence ou un code de Gold. Alternativement, on pourra opter pour un code appartenant à une famille de codes orthogonaux comme des codes de Hadamard.

L'ajout d'une signature numérique de faible amplitude relative par rapport au signal à émettre peut être considéré comme un tatouage numérique (*watermarking*) de ce signal.

Le signal numérique $s(t)$ tatoué par la signature $w(t)$ est noté $s_w(t)$. Le signal $s_w(t)$ est converti en un signal analogique à l'aide d'un convertisseur numérique analogique 140. Le signal analogique ainsi obtenu est ensuite transposé en bande RF par des moyens de modulation RF, 150. Par exemple, dans le cas d'un émetteur OFDM, les symboles OFDM, tatoués par la signature numérique, modulent une porteuse RF en 150.

Alternativement, la signature numérique peut être ajoutée au signal, de manière analogique, en sortie du convertisseur 140, préalablement à la transposition en bande RF. Dans tous les cas, l'amplitude de la signature est choisie sensiblement plus faible que celle du signal à émettre (avantageusement de 15 à 30 dB en dessous de l'amplitude du signal à émettre).

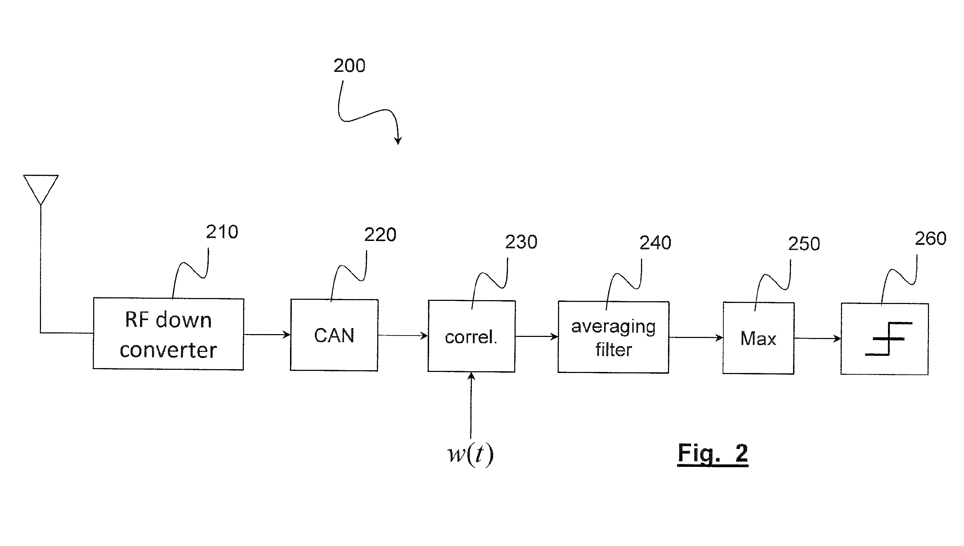

La Fig. 2 représente un récepteur radio d'un système opportuniste, destiné à détecter un signal radio transmis par l'émetteur de la Fig. 1.

Le récepteur 200 comprend un module de démodulation RF, 210, transposant le signal reçu en bande de base, suivi d'un convertisseur analogique numérique, 220. Le signal numérique issu du convertisseur 220 est corrélé, au moyen du corrélateur 230, avec la signature numérique du signal dont on cherche à détecter la présence, soit ici $w(t)$. La fenêtre de corrélation utilisée par le corrélateur correspond à la longueur $L$ de la signature numérique.

Un filtre moyenneur, 240, par exemple un filtre récursif (filtre IIR) de premier ordre, effectue une moyenne glissante avec un coefficient d'oubli, sur les valeurs de corrélation obtenues en sortie du corrélateur. Cette opération permet d'améliorer la robustesse de la détection en cas de faible rapport signal sur bruit.

La valeur maximale de corrélation est détectée au moyen du module de détection 250 puis comparée à un seuil dans le module de décision 260. Si la valeur maximale de corrélation excède ce seuil, le système opportuniste considère que le signal s(t), identifié par sa signature numérique $w(t)$, est présent dans la bande d'intérêt. Il en conclura, selon le scenario envisagé, qu'un système primaire ou bien qu'un système opportuniste est présent dans la bande d'intérêt. A l'inverse, si la valeur maximale de corrélation est inférieure au dit seuil, le système opportuniste considère que le signal s(t), identifié par sa signature numérique $w(t)$, est absent dans la bande d'intérêt et les conclusions inverses seront tirées dans les deux scenarii précités.

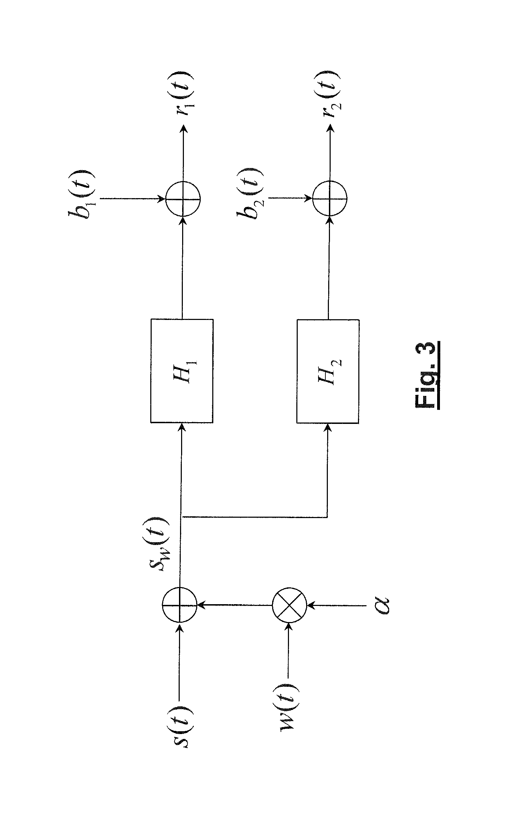

La Fig. 3 illustre le principe du tatouage d'un signal pour un premier utilisateur et de sa détection par un second utilisateur.

On rappelle que le signal tatoué par l'émetteur d'un système primaire ou opportuniste, $s_w(t)$, est obtenu en ajoutant une signature numérique $w(t)$ au signal à émettre. On suppose que la signature numérique $w(t)$ peut être considérée comme une variable aléatoire obéissant à une loi normale, autrement dit: $w(t) \sim N\left(0, \sigma_w^2\right)$. Si l'on fixe la puissance de tatouage $\sigma_w^2 = 1$, la puissance d'insertion du signal tatoué dépend uniquement du coefficient de pondération $\alpha$ et est caractérisée par le rapport WSR (*Watermark to Signal Ratio*) donnée par:

$$WSR = 10 \log \left( \frac{\alpha^2}{\sigma_s^2} \right) \qquad (1)$$

où $\sigma_s^2$ est la puissance du signal émis. Le coefficient de pondération $\alpha$ est avantageusement choisi de sorte à obtenir un compromis entre les performances de l'application ciblée et la sensibilité de détection souhaitée soit compris entre - 15dB à -30 dB.

Le signal tatoué $s_w(t)$ est reçu par le premier utilisateur, via un canal de réponse impulsionnelle $h_1(t)$ et par un second utilisateur via un canal de réponse impulsionnelle $h_2(t)$. On suppose ici que le signal tatoué est destiné au premier utilisateur, l'émetteur et le récepteur faisant respectivement partie d'un premier système opportuniste et d'un second système opportuniste en communication dans une bande donnée. Le second utilisateur cherche à déterminer si le signal tatoué $s_w(t)$ est présent (hypothèse H1) ou absent (hypothèse H0) dans cette bande.

Lorsque le signal tatoué est absent de la bande, le signal reçu par le second utilisateur peut s'exprimer par :

$$r_2(t) = b_2(t) \qquad (2)$$

où $b_2(t)$ est un bruit blanc additif gaussien. De manière similaire, si l'on envisage le cas (hypothèse H0) où un signal non- tatoué est présent dans la bande (le tatouage servant à discriminer le bruit mais également les signaux non- tatoués) , le signal reçu par le second utilisateur s'exprime comme :

$$r_2(t) = s(t) + b_2(t) \qquad (3)$$

En revanche, lorsque le signal tatoué est présent, (hypothèse H1) le signal reçu par le second utilisateur s'exprime par :

$$r_2(t) = h_2(t) \otimes \left( s(t) + \alpha w(t) \right) + b_2(t) \qquad (4)$$

Dans un but de simplification et sans préjudice de généralisation, on supposera que $h_2(t) = \delta(t)$ où $\delta(.)$ est la fonction de Dirac. Les résultats restent cependant valables quelle que soit la fonction $h_2(t)$. La sortie du corrélateur 230 du récepteur du second utilisateur est par conséquent :

$$c = \frac{\langle b_2, w \rangle}{L} \qquad (5)$$

dans le cas de l'hypothèse H0, et

$$c = \frac{\langle s + b_2, w \rangle}{L} + \alpha \qquad (6)$$

dans le cas de l'hypothèse H1, où $\langle x,y \rangle$ est le produit scalaire des séquences d'échantillons $x$ et $y$, et où $L$ est la longueur de ces séquences, à savoir la longueur de la signature numérique utilisée pour le tatouage.

Etant donné que la signature est décorrélée du bruit et du signal transmis $E(c) \simeq 0$ dans l'hypothèse H0 et $E(c) \simeq a$ dans l'hypothèse H1.

Le récepteur du second utilisateur décide entre l'hypothèse H0 et l'hypothèse H1 en comparant la valeur maximale de l'espérance, $\max(E(c))$ avec une valeur de seuil. En pratique, l'espérance est estimée à l'aide d'une moyenne glissante prise sur N valeurs de corrélation successives, comme on l'a vu plus haut.

Le tatouage du signal permet au second utilisateur de détecter sa présence avec un taux de détection sensiblement plus élevé qu'en utilisant les simples propriétés statistiques du signal $s(t)$ (par exemple sa cyclostationnarité). Pour le premier utilisateur, qui démodule le signal $s(t)$ pour récupérer les données transmises par l'émetteur, la présence du tatouage numérique ne dégrade que faiblement le rapport signal sur bruit.

**Revendications**

1. Méthode d'identification d'un signal RF pour système radio opportuniste, **caractérisée en ce que** :

   - on effectue une modulation numérique (110) de symboles à transmettre pour obtenir un flux de symboles de modulation ;
   - on ajoute (120) une signature numérique au flux de symboles de modulation pour obtenir un signal tatoué, ladite signature présentant une amplitude sensiblement plus faible que lesdits symboles de modulation ;
   - on transpose (150) en bande RF le signal ainsi tatoué.

2. Méthode d'identification selon la revendication 1, **caractérisée en ce que** le signal tatoué est obtenu en ajoutant numériquement la signature numérique au flux de symboles de modulation et en effectuant une conversion numérique analogique (140) du flux résultant.

3. Méthode d'identification selon la revendication 1, **caractérisée en ce que** le signal tatoué est obtenu en effectuant une conversion numérique analogique du flux de symboles de modulation d'une part pour générer un premier signal analogique et de la signature numérique d'autre part, pour générer un second signal analogique, et en faisant la somme des premier et second signaux analogiques ainsi obtenus.

4. Méthode d'identification selon l'une des revendications précédentes, **caractérisée en ce que** la signature numérique est un code de Gold.

5. Méthode d'identification selon l'une des revendications 1 à 3, **caractérisée en ce que** la signature numérique est un code de Hadamard.

6. Méthode d'identification selon l'une des revendications précédentes, **caractérisée en ce que** la modulation numérique est une modulation multi-porteuse.

7. Méthode d'identification selon l'une des revendications 1 à 5, **caractérisée en ce que** la modulation numérique est une modulation mono-porteuse.

8. Méthode de détection par un système radio opportuniste, d'un signal RF identifié à l'aide de la méthode d'identification selon la revendication 1, **caractérisée en ce que :**

   - on transpose (210) le signal RF en bande de base pour obtenir un signal analogique en bande de base ;
   - on effectue une conversion analogique numérique (220) du signal analogique numérique en bande de base pour obtenir un signal numérique ;
   - on effectue une corrélation (230) du signal numérique avec une signature numérique prédéterminée pour obtenir une valeur de corrélation ;
   - on compare (260) ladite valeur de corrélation à une valeur de seuil ; et
   - on décide que ledit signal RF est présent si ladite valeur de corrélation est supérieure à la valeur de seuil et qu'il est absent dans le cas inverse.

9. Méthode de détection selon la revendication 8, **caractérisée en ce que** l'on obtient des valeurs de corrélation pour une pluralité de fenêtres de corrélation successives et que l'on effectue une moyenne (240) des valeurs de corrélation ainsi obtenues pour obtenir des valeurs de corrélation moyennes.

**10.** Méthode de détection selon la revendication 9, **caractérisée en ce que** la moyenne des valeurs de corrélation est obtenue à l'aide d'un filtre récursif à coefficient d'oubli.

**11.** Méthode de détection selon la revendication 10, **caractérisée en ce que** l'on détermine une valeur de corrélation maximale (250) à partir des valeurs de corrélation moyennes fournies par ledit filtre (240), ladite décision étant alors prise sur la base de ladite valeur de corrélation maximale.

**12.** Méthode de détection selon l'une des revendications 8 à 11, **caractérisée en ce que** ladite signature numérique est un code de Gold.

**13.** Méthode de détection selon l'une des revendications 8 à 11, **caractérisée en ce que** ladite signature numérique est un code de Hadamard.

**Fig. 1**

EP 2 640 027 A1

**Fig. 2**

**Fig. 3**

| | Europäisches Patentamt European Patent Office Office européen des brevets | RAPPORT DE RECHERCHE EUROPEENNE | Numéro de la demande EP 13 15 8686 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | L. DE C.T. GOMES ET AL.: "Tatouage audio exploitant des propriétés de cyclostationnarité", TRAITEMENT DU SIGNAL 2001 , vol. Volume 19, no. 1 19 février 2004 (2004-02-19), pages 1-10, XP002682764, Extrait de l'Internet: URL:http://documents.irevues.inist.fr/bitstream/handle/2042/2194/Bonnet%E2%80%931009.pdf?sequence=1 [extrait le 2012-09-04] * page 2 - page 3 * ----- | 1-13 | INV. H04L27/00 |
| X | FR 2 919 135 A1 (COMMISSARIAT ENERGIE ATOMIQUE [FR]) 23 janvier 2009 (2009-01-23) * page 3, ligne 5 - ligne 10 * ----- | 1-13 | |
| | | | DOMAINES TECHNIQUES RECHERCHES (IPC) H04L |

Le présent rapport a été établi pour toutes les revendications

| Lieu de la recherche | Date d'achèvement de la recherche | Examinateur |
|---|---|---|
| Munich | 6 août 2013 | Belloni, Paolo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 15 8686

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-08-2013

| Document brevet cité au rapport de recherche | Date de publication | Membre(s) de la famille de brevet(s) | Date de publication |
|---|---|---|---|
| FR 2919135 A1 | 23-01-2009 | EP 2168337 A2 | 31-03-2010 |
| | | FR 2919135 A1 | 23-01-2009 |
| | | JP 5161307 B2 | 13-03-2013 |
| | | JP 2010534018 A | 28-10-2010 |
| | | KR 20100059794 A | 04-06-2010 |
| | | US 2010195705 A1 | 05-08-2010 |
| | | WO 2009010564 A2 | 22-01-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Cognitive radio : an integrated agent architecture for software defined radio. **J. MITOLA.** PhD Dissertation. Royal Institute of Technology, 08 Mai 2000
- **C. CORDEIRO et al.** IEEE 802.22 : an introduction to the first wireless standard base on cognitive radios. *Journal of Communications,* Avril 2006, vol. 1 (1), 38-47

- **P.D. SUTTON et al.** Cyclostationary signatures in practical cognitive radio applications. *IEEE Journal on Selected Areas in Comm.,* Janvier 2008, vol. 26 (1), 13-24